Europäisches Patentamt

European Patent Office

Office européen des brevets

(19)

(11) Numéro de publication: **0 088 697**
**B1**

# (12) FASCICULE DE BREVET EUROPEEN

(45) Date de publication du fascicule du brevet:
**19.06.85**

(21) Numéro de dépôt: **83400472.3**

(22) Date de dépôt: **07.03.83**

(51) Int. Cl.⁴: **B 01 D 23/16**, B 01 D 21/01

(54) **Procédé pour épandre une pulpe en vue de son séchage naturel.**

(30) Priorité: **05.03.82 FR 8203662**

(43) Date de publication de la demande:
**14.09.83 Bulletin 83/37**

(45) Mention de la délivrance du brevet:
**19.06.85 Bulletin 85/25**

(84) Etats contractants désignés:
**AT BE CH DE FR GB IT LI LU NL SE**

(56) Documents cités:
**FR - A - 1 320 293**
**GB - A - 1 428 846**

(73) Titulaire: **SOCIETE METALLURGIQUE LE NICKEL -
S.L.N., Tour Maine-Montparnasse 33, avenue du Maine,
F-75751 Paris Cedex 15 (FR)**

(72) Inventeur: **Cardini, Jean-Louis, 36, boulevard Henri IV,
F-75004 Paris (FR)**
Inventeur: **Laurent, Claude, 109, rue du Cherche-Midi,
F-75006 Paris (FR)**
Inventeur: **Fer, Jean-Pierre, Villa SLN No 44 Lotissement
Steinmetz Magenta II, Noumea Nouvelle Caledonie (FR)**

(74) Mandataire: **Ricalens, François, MINEMET RECHERCHE
B.P. 106 1, avenue Albert Einstein, F-78191 Trappes
Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé pour épandre une pulpe en vue de son séchage naturel.

Elle a plus particulièrement trait au traitement des pulpes dont da fraction solide présente un $d_{80}$ inférieur à 100 micromètres et de préférence inférieur à 20 micromètres. Le $d_{80}$ est la plus dimension de maille par laquelle 80% du produit est capable de passer.

De telles pulpes sont très fréquentes dans de très nombreux domaines de l'industrie minière et metallurgique. De telles boues peuvent aussi être rencontrées dans le traitement des eaux usées en vue de la purification de l'eau.

Le traitement des pulpes composées de fractions très fines est souvent très difficile, très long et très coûteux en énergie dès lors que l'on désire obtenir les matières sèches qu'elles contiennent avec un taux de siccité important.

C'est pourquoi la Demanderesse s'est orientée vers un séchage qui ne présente pas de tels inconvénients ou qui abaissent considérablement le coût de tels traitements.

C'est pourquoi on s'est orienté vers un procédé de séchage naturel, c'est-à-dire en évaporant l'eau par exposition de la pulpe à l'air atmosphérique. De telles techniques sont utilisées depuis des temps immémoriaux par les sauniers qui produisent ainsi une portion importante des sels de table consommés dans le monde.

Toutefois, une simple transposition des techniques des sauniers aux pulpes mentionnées ci-dessus était impossible et il est apparu des problèmes dont la résolution s'est révélée très difficile. En particulier, on peut observer que, sur des produits ayant atteint un taux de siccité presque convenable, une pluie peut provoquer une réhydratation faisant perdre ainsi un temps appréciable.

En outre, sous certains climats, les précipitations interviennent à une telle fréquence et avec une telle abondance qu'il est quasiment impossible de sècher une pulpe suivant cette technique.

C'est pourquoi la Demanderesse a exécuté de longues et difficiles recherches dans le but de trouver des techniques d'épandage et de construction des bassins d'épandage qui permettent d'écouler l'eau de pluie sans que cette dernière ne réhydrate la pulpe séchée.

Un autre but de la présente invention est de fournir un procédé d'épandage qui permette d'obtenir des pavés de matière sèche de grande dimension.

Ces buts sont atteints au moyen d'un procédé pour épandre en vue de son séchage naturel une pulpe dont la fraction solide présente un $d_{80}$ inférieur à 100 micromètres, caractérisé par le fait qu'il comprend en succession les étapes suivantes:

a) ajustement du taux de solide de la pulpe à une valeur comprise entre 2 et 25% en poids;

b) addition et mélange d'un floculant à la pulpe, la dose de floculant étant comprise entre les deux tiers (valeur arrondie) et 98% de la dose optimale nécessaire pour floculer une telle pulpe;

c) épandage à l'air libre dans un bassin dont les bords sont perméables et dont le fond présente une pente inférieure à 5 pour mille, ledit épandage intervenant et le mélange dudit floculant.

En effet, on a trouvé que de manière surprenante il était nécessaire pour obtenir un bon séchage que le taux de solide des pulpes soit peu élevé et donc d'ajuster, le cas échéant, le taux de solide par dilution.

Cette dilution est de préférence telle que le taux de solide de la pulpe atteigne une valeur comprise entre 5 et 15% en poids.

Un point important est l'addition et le mélange du floculant à la pulpe. Cette addition est très critique. D'une part, il faut que la dose de floculant soit suffisante pour qu'une assez bonne floculation soit obtenue et d'autre part on s'est aperçu qu'une dose élevée de floculant risquait de gêner un bon séchage.

Sans cette explication ait un caractère limitatif, il semble que lorsque l'on ajoute le floculant à une dose comprise entre les deux tiers et 98%, avantageusement entre 80 et 98% et de préférence entre 85 et 95% de la dose optimale nécessaire pour floculer une telle pulpe, il reste quelques petites particules non floculées qui se déposent à la surface du matériau floculé, rendant cette surface imperméable, la perméabilité de l'ensemble étant alors assurée par le retrait de la pulpe. Ce retrait provoque la fissuration de la matière sèche formant les pavés et assurant une bonne perméabilité et un bon écoulement de l'eau.

Ce dosage semble aussi jouer un rôle dans la qualité du retrait. Il faut dans certains pays pluvieux que les fissures aillent jusqu'au fond du bassin pour que l'eau puisse s'écouler par ce dernier.

Au cours de toute la présente description, la dose optimale de floculant est définie par la quantité nécessaire et suffisante pour obtenir la vitesse de sédimentation la plus rapide, cette vitesse étant par exemple mesurée au moyen de l'essai de laboratoire connu de l'homme de métier sous le vocable anglo-saxon de »jar test«.

Les floculants préférés sont les floculants organiques présentant un groupe polaire tel que amide, ether ou ester, parmi lesquels on peut citer le polyacrylamide vendu sous la marque déposée »Séparan« (voir la brochure édité par The Dow Chemical Company n° EU8564-F-573 imprimée en Suisse), le polyéthylène-glycol vendu sous la dénomination commerciale »Floerger FA10« par la compagnie Streichenberger S. A. et le copolymère d'acrylamide et d'acrylate vendu sous la marque déposée »Sedipur T.F.5« (voir la notice technique éditée en Janvier 1973 sous le n° M1977f par B.A.S.F.), les meilleurs résultats étant obtenus pour les poids moléculaires les plus élevés du floculant.

Un des aspects critiques de la floculation réside dans le temps qu'il est nécessaire de respecter entre le moment de la floculation et le moment de l'épandage. L'intervalle entre ces deux opérations doit être compris entre 1 et 20, de préférence entre 2 et 10 minutes.

En effet, sans que l'on puisse expliquer pourquoi, on a constaté qu'il fallait que la floculation ait commencé mais ne soit pas complète au moment de l'épandage.

Pour obtenir une bonne siccité des produits et éviter le plus possible les éventuels problèmes pouvant intervenir à la suite des précipitations qui peuvent être abondantes, il est préférable que le bassin dans lequel est réalisé le séchage naturel satisfasse aux conditions exposées ci-après.

La pente du bassin doit être inférieure à 5 et avantageusement à 2 pour mille et de préférence comprise entre 0,5 et 1,5 pour mille.

Le bassin peut avoir forme possible. Il peut avoir une forme circulaire, le point d'épandage étant alors situé au milieu et le fond du bassin ayant alors la forme d'un cône très aplati. Le bassin peut également avoir la forme d'un polygone régulier, le fond ayant alors la forme d'un polyèdre dont la base est formée par ledit polygone. En particulier, la forme d'hexagone régulier est assez satisfaisante dans la mesure où c'est une forme qui occupe peu de place.

Toutefois, pour des raisons de simplicité et d'encombrement, il est péféré la forme d'un rectangle dont le rapport entre la longueur et la largeur est compris entre 1 et 50, la largeur pouvant être avantageusement comprise entre 5 et 100 mètres. Dans ce cas la pente est la pente longitudinale.

Dans ce cas d'un rectangle, on peut placer le point d'épandage en de nombreux endroits, soit sur une arête définie par deux plans formant la surface du fond, soit plus simplement, si le fond est parfaitement plan, à l'extrémité la plus élevée du rectangle, au milieu de la largeur.

Le fond du bassin est avantageusement réalisé en un matériau choisi dans le groupe constitué par le sable filtrant et la terre battue, de préférence en sable dont les grains ont une taille comprise entre 20 micromètres et 3 millimètres. Quand le seul écoulement au travers des murettes risque de ne plus suffire, et ce notamment dans les pays pluvieux, il est préférable de choisir une taille comprise en 200 micromètres et 3 millimètres pour assurer une bonne perméabilité.

Les bords du bassin sont avantageusement constitués par des murettes dont la hauteur est comprise entre 0,5 et 1 mètre. Avantageusement les bords sont des murettes constituées par des cordons de produits grenus de 20 micromètres à 3 millimètres, de préférence, en un sable dont la taille des grains est comprise entre 200 micromètres et 3 mm.

Pour faciliter l'écoulement de l'eau après décantation, les murettes peuvent comporter des busettes (3), de préférence amovibles.

La quantité de matière solide sèche à épandre sous forme de pulpe est avantageusement comprise entre 50 et 200 kg par mètre carré.

Toutefois, ces quantités peuvent varier suivant les caractéristiques du produit à faire sécher.

Le débit de matières solides à l'épandage doit être choisie entre 2 et 20, de préférence entre 3 et 8 kg/h/mètre carré.

Les figures représentent un mode de réalisation non limitatif d'un bassin de décantation et de séchage naturel.

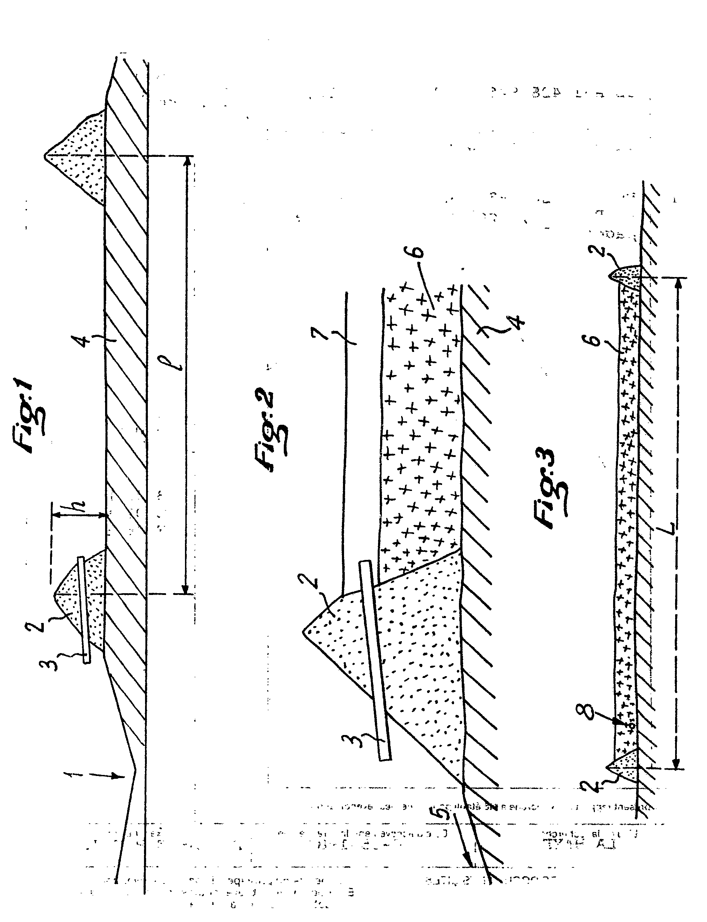

La figure 1 représente une coupe transversale d'un bassin rectangulaire où (4) est le fond du bassin, (2) les murettes réalisiées par une simple levée de sable dont les grains ont une dimension comprise entre 200 micromètres et 3 millimètres. Des busettes amovibles (3) sont placées à un niveau tel qu'il y ait une bonne élimination de l'eau libérée par la décantation, cette eau étant collectée dans un drain (1).

La figure 2 est une coupe transversale partielle montrant le bassin en cours de fonctionnement. La pulpe commence à se décanter et donne une eau libérée (7) qui s'écoule par la busette amovible (3) au travers de la levée de sable (2). La busette (3) est placée au-dessus du niveau de la pulpe épaissie (6). L'eau (5) filtrant au travers de la levée (2) formant bord s'écoule également vers le drain.

La figure 3 est une coupe longitudinale montrant un choix préféré du point d'épandage. Ce point est voisin d'une des levées (2) formant les bords en largeur dudit bassin.

h, l, L indiquent sur ces figures la hauteur, la largeur et la longueur qui sont de préférence respectivement de 0 à 0,5 mètre, de 20 à 40 mètres et de 300 à 500 mètres, la pente non figurée étant alors 0,6 pour mille.

Une autre donnée être prise en considération: le débit d'eau par mètre de murette lors de l'épandage. Ce chiffre est variable avec la perméabilité de la murette, mais une chiffre de 0,2 m$^3$ par heure et par mètre de murette est convenable (pour des murettes en sable de 300 micromètres à 3 millimètres.

Dans la description précédente, les valeurs chiffrées sont des valeurs arrondis et les zéros ne sont pas des chiffres significatifs.

Les exemples de réalisation de la présente invention, non limitatifs, suivants ont pour but de mettre les spécialistes à même de déterminer aisément les conditions opératoires qu'il convient d'utiliser dans chaque cas particulier.

Exemple 1

Mise en œuvre sur boues de nickel obtenues par débourbage et attrition de minerai garniéritique selon la technique décrite dans la demande de brevet français n° 75-25.428

Caractéristiques des bassins

Dimensions: 30 × 50 mètres
Hauteur des murettes: 0,55 mètre
Pente: 0 pour mille
Nature du fond: sable 300 micromètres — 3 millimètres de péridotite altérée. Ce sable est, après de nombreuses opérations de séchage, pollué de boues finies laissées par les chargeuses de ramassage.
Nature des murettes: sable 300 micromètres — 3 millimètres

Caractéristiques de la pulpe

Boue de granulométrie inférieure à 20 micromètres composée de la partie fine des minerais de nickel (silicates de fer et de magnésium et oxydes de fer)

Dilution: 11% de solide (89% d'eau douce)
Floculation à l'aide de produit vendu sous la dénomination commerciale de »Sedipur« à une dose de 200 grammes par tonne de solide, soit une dose de 80% de la quantité déterminée par le »jar-test«

Caractéristiques de l'épandage

Débit de pulpe: 20 m$^3$/h
Point d'épandage: centre du bassin
Quantité épandue: 100 kg de solide par m$^2$

Caractéristiques du séchage

Pente sur produits secs: 0,6 pour mille
Siccité à 30 jours (approximative): 75%

Caractéristiques du ramassage

Chargeuse frontale: 100 tonnes par heure

Cet exemple est assez voisin des conditions optimales de séchage.


Exemple 2

Mise en œuvre du procédé sur boues nickelifères obtenues par débourbage de minerai garniéritique

Caractéristiques des bassin:

Dimensions: 20 × 25 mètres
Hauteur des murettes: 0,55 mètre
Pente: 0 pour mille
Nature du fond: Couche filtrante constituée de:

— 300 mm de cailloux 30—150 mm
— 200 mm de cailloux 8—30 mm
— 100 mm de scories de four électrique 0—3 mm

Nature des murettes: scorie des fours électriques de même granulométrie que ci-dessus

Caractéristiques de la pulpe

Boue de granulométrie inférieure à 13 micromètres composée de la partie fine des minerais de nickel (silicates de fer et de magnésium et oxydes de fer)

Dilution: 5% de solide
Floculation à une dose de 50 grammes par tonne de floculant

Caractéristiques de l'épandage

Débit de pulpe: 35 m$^3$/h
Point d'épandage: centre du bassin
Quantité épandue: 70 kg par m$^2$

Caractéristiques du séchage

Pente sur produits secs: 0,4 pour mille
Siccité à 30 jours (approximative): 65%

Caractéristiques du ramassage

Chargeuse frontale: 60 tonnes par heure

On constate que dans cet exemple il y a percolation latérale très importante à travers les murettes avec tendance à la formation de renards dans celles-ci. Le séchage est possible, mais cette tendance à la formation de renards limite la quantité d'eau et, par suite, la quantité épandue au mètre carré. Le séchage est un peu moins bon car il y a une tendance au colmatage de la murette.


Exemple 3

Mise en œuvre du procédé sur des boues nickelifères obtenues par débourbage de minerai garniéritique

Caractéristiques des bassins

Dimensions: 20 × 25 mètres
Hauteur des murettes: 0,55 mètre
Pente: 0 pour mille
Nature du fond: Couche filtrante constituée de:

— 300 mm de cailloux 30—150 mm
— 200 mm de cailloux 8—30 mm
— 100 mm de scories de four électrique 0—3 mm

Nature des murettes: scorie des four électriques de même granulométrie que ci-dessus

Caractéristiques de la pulpe

Boue de granulométrie inférieure à 13 micromètres composée de la partie fine des minerais de nickel (silicates de fer et de magnésium et oxydes de fer)

Dilution: 21,6% de solide
Floculation à une dose de 200 grammes par tonne de floculant

Caractéristiques de l'épandage

Débit de pulpe: 15 m³/h
Point d'épandage: à 2 mètres du bord d'un petit côté du bassin
Quantité épandue: 100 kg par m²
Pente observée à la fin de l'épandage: 0,4 pour mille

Caractéristiques du séchage

Pente sur produits secs: 0,3 pour mille
Siccité à 30 jours (approximative): 65%

Caractéristiques du ramassage

Chargeuse frontale: 60 tonnes par heure

La pente conduit à une épaisseur de boue très variable d'un point à un autre, ce qui est possible dans un petit bassin mais n'a aucun sens dans une installation industrielle. Les produits ramassés là où la couche est mince sont pulvérulents et générateurs de poussière. Les produits ramassés où la couche est épaisse constituent une boue plastique difficilement manipulable.

**Revendications**

1. Procédé pour épandre en vue de son séchage naturel une pulpe dont la fraction solide présente un $d_{80}$ inférieur à 100 micromètres, caractérisé par le fait qu'il comprend en succession les étapes suivantes:

a) ajustement du taux de solide de la pulpe à une valeur comprise entre 2 et 25% en poids;

b) addition et mélange d'un floculant à la pulpe, la dose de floculant étant comprise entre deux tiers et 98% de la dose optimale nécessaire pour floculer une telle pulpe;

c) épandage à l'air libre dans un bassin dont les bords sont perméables et dont le fond présente une pente inférieure à 5 pour mille, ledit épandage intervenant dans un délai de 1 à 20 minutes après l'addition et le mélange dudit floculant.

2. Procédé selon la revendication 1, caractérisé par le fait que dans l'étape a) le taux de solide de la pulpe est ajusté à une valeur comprise entre 5 et 15% en poids.

3. Procédé selon les revendications 1 et 2 prises séparément, caractérisé par le fait que dans l'étape b) la dose de floculant est comprise entre 85 et 95% de la dose limite inférieure normale floculer une telle pulpe.

4. Procédé selon les revendications 1 à 3 prises séparément, caractérisé par le fait que ledit épandage de la pulpe intervient dans un délai de 2 à 10 minutes après l'addition et le mélange du floculant à la pulpe.

5. Procédé selon les revendications 1 à 4 prises séparément, caractérisé par le fait que ledit bassin d'épandage présente une pente compris entre 0,5 et 1,5 pour mille.

6. Procédé selon les revendications 1 à 5 prises séparément, caractérisé par le fait que ledit bassin d'épandage présente la forme d'un rectangle dont le rapport entre la longueur et la largeur est compris entre 1 et 50.

7. Procédé selon la revendication 6, caractérisé par le fait que le largeur dudit rectangle est comprise entre 5 et 100 mètres.

8. Procédé selon les revendications 1 à 7 prises séparément, caractérisé par le fait que le fond du bassin d'épandage est réalisé en un matériau choisi dans le groupe constitué par le sable filtrant et la terre battue.

9. Procédé selon les revendications 1 à 8 prises séparément, caractérisé par le fait que le fond dudit bassin est réalisé en sable dont les grains ont une taille comprise entre 20 micromètres et 3 millimètres.

10. Procédé selon les revendications 1 à 9 prises séparément, caractérisé par le fait que les bords dudit bassin sont constitués par des murettes dont la hauteur est comprise entre 0,5 et 1 mètre.

11. Procédé selon les revendications 1 à 10 prises séparément, caractérisé par le fait que les bords dudit bassin d'épandage sont des murettes constituées par des cordons de produits grenus.

12. Procédé selon la revendication 11, caractérisé par le fait que ledit produit grenu est un sable dont la taille des grains est comprise entre 200 micromètres et 3 mm.

13. Procédé selon les revendications 1 à 12 prises séparément, caractérisé par le fait que lesdites murettes comportent des busettes (3) pour l'évacuation de l'eau de décantation.

14. Procédé selon les revendications 1 à 13 prises séparément, caractérisé par le fait que lesdites busettes (3) sont amovibles.

15. Procédé selon les revendications 1 à 14 prises séparément, caractérisé par le fait que la quantité de pulpe épandue correspond à une masse de matière solide par mètre carré comprise entre 50 et 200 kg.

16. Procédé selon les revendications 1 à 15 prises séparément, caractérisé par le fait que la vitesse d'épandage est comprise entre 2 et 20 kg/h/m².

17. Procédé selon les revendications 1 à 16 prises séparément, caractérisé par le fait que la matière sèche de la pulpe présente un $d_{80}$ inférieur à 20 micromètres.

## Patentansprüche

1. Verfahren zum Absetzen eines Schlammes, dessen Festanteil ein $d_{80}$ unter 100 μm aufweist, zwecks seiner natürlichen Trocknung, dadurch gekennzeichnet, das nacheinander die folgenden Schritte umfaßt

a) Justierung des Festanteils des Schlammes auf einen Wert im Bereich von 2 bis 25 Gew.-%;

b) Zusetzen und Einmischen eines Flockungsmittels in den Schlamm, wobei die Flockungsmittelmenge im Bereich von zwei Dritteln bis 98% der optimalen, zur Flockung eines solchen Schlammes erforderlichen Menge liegt;

c) Ausbreiten an der freien Luft in einem Becken, dessen Wände durchlässig sind und dessen Boden eine Neigung unter 5 Promille hat, wobei das Ausbreiten in einem Zeitraum von 1 bis 20 min nach dem Zusetzen und dem Einmischen des Flockungsmittels erfolgt.

2. Verfahren nach dem Anspruch 1, dadurch gekennzeichnet, daß im Schritt a) der Festanteil des Schlammes auf einen Wert im Bereich von 5 bis 15 Gew.-% justiert wird.

3. Verfahren nach dem Anspruch 1 oder 2, dadurch gekennzeichnet, daß im Schritt b) die Flockungsmittelmenge im Bereich von 85 bis 95% der unteren normalen Grenzmenge zur Flokkung eines solchen Schlammes liegt.

4. Verfahren nach einem der Ansprüche 1 bis 3, dadurch gekennzeichnet, daß das Ausbreiten des Schlammes in einem Zeitraum von 2 bis 10 min nach dem Zusetzen und dem Einmischen des Flockungsmittels in den Schlamm erfolgt.

5. Verfahren nach einem der Ansprüche 1 bis 4, dadurch gekennzeichnet, daß das Ausbreitbecken eine Neigung im Bereich von 0,5 bis 1,5 Promille hat.

6. Verfahren nach einem der Ansprüche 1 bis 5, dadurch gekennzeichnet, daß das Ausbreitbecken die Form eines Rechtecks hat, dessen Verhältnis zwischen der Länge und der Breite im Bereich von 1 bis 50 liegt.

7. Verfahren nach Anspruch 6, dadurch gekennzeichnet, daß die Breite des Rechtecks im Bereich von 5 bis 100 m liegt.

8. Verfahren nach einem der Ansprüche 1 bis 7, dadurch gekennzeichnet, daß der Boden des Ausbreitbeckens aus einem Material hergestellt ist, das aus der aus Filtriersand und Stampferde gebildeten Gruppe gewählt ist.

9. Verfahren nach einem der Ansprüche 1 bis 8, dadurch gekennzeichnet, daß der Boden des Beckens aus Sand hergestellt ist, dessen Körner eine Abmessung im Bereich von 20 μm bis 3 mm haben.

10. Verfahren nach einem der Ansprüche 1 bis 9, dadurch gekennzeichnet, daß die Wände des Beckens aus kleinen Mauern hergestellt sind, deren Höhe im Bereich von 0,5 bis 1 m liegt.

11. Verfahren nach einem der Ansprüche 1 bis 10, dadurch gekennzeichnet, daß die Wände des Ausbreitbeckens aus Strängen von körnigen Stoffen gebildete kleine Mauern sind.

12. Verfahren nach Anspruch 11, dadurch gekennzeichnet, daß der körnige Stoff ein Sand ist, dessen Abmessung der Körner im Bereich von 200 μm und 3 mm liegt.

13. Verfahren nach einem der Ansprüche 1 bis 12, dadurch gekennzeichnet, daß die kleinen Mauern Düsen (3) zum Ablauf des Dekantierwassers aufweisen.

14. Verfahren nach einem der Ansprüche 1 bis 13, dadurch gekennzeichnet, daß die Düsen (3) herausziehbar sind.

15. Verfahren nach einem der Ansprüche 1 bis 14, dadurch gekennzeichnet, daß die Menge ausgebreiteten Schlammes einer Feststoffmasse je m² im Bereich von 50 bis 200 kg entspricht.

16. Verfahren nach einem der Ansprüche 1 bis 15, dadurch gekennzeichnet, daß die Ausbreitgeschwindigkeit im Bereich von 2 bis 20 kg/h/m² liegt.

17. Verfahren nach einem der Ansprüche 1 bis 16, dadurch gekennzeichnet, daß die Trockensubstanz des Schlammes ein $d_{80}$ unter 20 μm aufweist.

## Claims

1. A method spreading out a pulp, the solid fraction of which has a $d_{80}$ (as hereinbefore defined) less than 100 microns, with a view to its natural drying, characterised in that the method comprises, in succession, the following steps:

a) adjustment of the proportion of solids in the pulp to a value between 2 and 25% by weight;

b) addition of flocculating agent to the pulp and mixing the two, the proportion of the flocculating agent being between two thirds and 98% of the optimum proportion necesary to flocculate such a pulp; and

c) spreading out the pulp in the open air in a basin the sides of which are permeable and the bottom of which has a gradient less than 5 in 1000, said spreading out occuring within a period of 1 to 20 minutes after the addition and mixing of said flocculating agent.

2. A method as claimed in Claim 1, characterised in that, in stage a), the proportion of solid in the pulp is adjusted to a value between 5 and 15% by weight.

3. A method as claimed in Claim 1 or Claim 2, characterised in that, in stage b), the proportion of flocculating agent is between 85 and 95% of the normal lower limiting proportion to flocculate such a pulp.

4. A method as claimed in any of Claims 1 to 3, characterised in that said spreading out of the pulp occurs within a period of 2 to 10 minutes after the addition of the flocculating agent to the pulp and the mixing of the two.

5. A method as claimed in any of Claims 1 to 4, characterised in that said spreading basin has a gradient between 0.5 and 1.5 in 1000.

6. A method as claimed in any of Claims 1 to 5, characterised in that said spreading basin has the shape of a rectangle in which the ratio between the length and the width is between 1 and 50.

7. A method as claimed in Claim 6, characterised in that the width of said rectangle is between 5 and 100 metres.

8. A method as claimed in any of Claims 1 to 7, characterised in that the bottom of the spreading basin is made of a material selected from the group comprising filter sand and clay.

9. A method as claimed in any Claims 1 to 8, characterised in that the bottom of said basin is made of sand, the grains of which have a size between 20 microns and 3 millimetres.

10. A method as claimed in any Claims 1 to 9, characterised in that the sides of said basin consist of low walls, the height of which is between 0.5 and 1 metre.

11. A method as claimed in any of Claims 1 to 10, characterised in that the sides of said spreading basin are low walls consisting of courses of granular products.

12. A method as claimed in Claim 11, characterised in that said granular product is a sand, the size of the grains of which is between 200 microns and 3 millimetres.

13. A method as claimed in any of Claims 1 to 12, characterised in that said sizes include pipes (3) for the evacuation of separated water.

14. A method as claimed in Claim 13, characterised in that said pipes (3) are removable.

15. A method as claimed in any of Claims 1 to 14, characterised in that the quantity of spread-out pulp corresponds to a mass of solid matter per square metre between 50 and 200 kg.

16. A method as claimed in any of Claims 1 to 15, characterised in that the spreading-out speed is between 2 and 20 kg/h/m$^2$.

17. A method as claimed in any of Claims 1 to 16, characterised in that the dry matter of the pulp has a $d_{80}$ less than 20 microns.

Fig.1

Fig.2

Fig.3

0 088 697